(19) Europäisches Patentamt
European Patent Office
Office européen des brevets

(11) **EP 2 268 002 A1**

(12) **EUROPÄISCHE PATENTANMELDUNG**

(43) Veröffentlichungstag:
**29.12.2010 Patentblatt 2010/52**

(51) Int Cl.:
***H04N 5/33*** (2006.01)  ***H04N 5/217*** (2006.01)

(21) Anmeldenummer: **10006164.7**

(22) Anmeldetag: **15.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **26.06.2009  DE 102009030568**

(71) Anmelder: **LFK-Lenkflugkörpersysteme GmbH**
**86529 Schrobenhausen (DE)**

(72) Erfinder:
• **Assel, Michael**
  **86438 Kissing (DE)**
• **Wieczorek, Hanne-Lore**
  **81369 München (DE)**

(74) Vertreter: **Avenhaus, Beate**
**EADS Deutschland GmbH**
**Patentabteilung**
**81663 München (DE)**

(54) **Verfahren zur Korrektur der Grauwerte eines IR-Detektors**

(57)      Mit einem abschnittsweise linearen Verfahren zur Korrektur von Detektorinhomogenitäten von Infrarot-Detektorarrays werden auf einfache Weise und mit geringem Aufwand an Rechenleistung und Speicherplatz sehr gute Annäherungen an die ideale Kennlinien der Pixel erreicht.

Abbildung 2: Exemplarischer Vergleich von linearer ( gepunktet) , quadratischer (gestrichelt) und zweifach, linearer (Strichpunktlinie) Korrektur.

## Beschreibung

Die Erfindung betrifft ein Verfahren zur Korrektur der Grauwerte eines zweidimensionalen IR-Detektors unter Verwendung gespeicherter Korrekturwerte für Offset und Verstärkung.

Infrarot-Detektorarrays bestehen aus einer Vielzahl von Einzeldetektoren, die aufgrund von Toleranzen im Herstellungsprozess alle ein leicht unterschiedliches Verhalten bei Bestrahlung mit Licht zeigen. Selbst im Fall eines abgedeckten Detektors ergeben sich für die einzelnen Pixel unterschiedliche Spannungswerte. Diese Dunkelspannung wird als Offset bezeichnet und kann durch Subtraktion beziehungsweise Addition eines konstanten Wertes ausgeglichen werden (Offsetabgleich). Selbst nach erfolgten Offsetabgleich ergibt sich ein inhomogenes Bild, das aufgrund einer individuellen Empfindlichkeit der Bildpunkte zustande kommt. Außerdem muss der so genannte Randabfall, der durch eine geringere Photonenflussdichte in den Randbereichen des Detektorarrays (FPA = Focal Plane Array) hervorgerufen wird, kompensiert wird. Die letztgenannten Effekte lassen sich im Allgemeinen durch einen multiplikativen Anteil kompensieren (Gainabgleich). Trotz eines kombinierten Gain- und Offset-Abgleichs zeigen sich teilweise noch weitere Bildinhomogenitäten, die sich aufgrund der nichtlinearen Umsetzung des auf die Einzelpixel einfallenden Lichts ergeben. Um solche nichtlinearen Bildbestandteile zu unterdrücken bedarf es aufwändigerer Korrekturalgorithmen.

Die bekannten Korrekturalgorithmen sind entweder die lineare Korrektur oder die quadratische Korrektur, die je nach Typ unterschiedliche Vor- und Nachteile aufweisen. Neben diesen statischen Korrekturmethoden, bei denen die Korrekturkoeffizienten zu einem früheren Zeitpunkt bestimmt werden und dann konstant bleiben, existieren auch noch adaptive Algorithmen. So zeigt beispielsweise die DE 197 15 983 C1 eine dynamische Anpassung eines der Korrekturkoeffizienten.

Bei einer linearen Korrektur wird das vom Detektor kommende Eingangssignal $S_E(T)_i$ jedes Pixels $P_i$ unter Berücksichtigung der Hintergrundtemperatur T, des Offsetwertes $O_i$ und einer radiometrischen Konstanten K mit Hilfe einer linearen Transformation in das korrigierte Ausgangssignal $S_A(T)_i$ umgewandelt:

$$S_A(T)_i = G_i \cdot (S_E(T)_i + O_i) + K$$

Zur Bestimmung der Korrekturkoeffizienten sind Aufnahmen von Referenzflächen mit konstanter Temperaturverteilung bei mindestens zwei unterschiedlichen Temperaturen notwendig. Für diese Abgleichmethode werden zwei Korrekturtabellen benötigt, die jeweils für jedes Pixel $P_i$ einen Offsetwert $O_i$ und einen Gainwert $G_i$ enthalten. Der Rechenaufwand beschränkt sich auf eine Multiplikation und eine Addition pro Pixel. Der wesentliche Nachteil dieser Methode besteht jedoch darin, dass der nichtlineare Kennlinienverlauf der einzelnen Detektorpixel nur sehr ungenau angenähert werden kann.

Eine bekannte Alternative hierzu ist die quadratische Korrektur. dabei erfolgt die Korrektur des Eingangssignals durch ein Polynom 2. Ordnung. Für jedes Pixel $P_i$ müssen bei dieser Methode drei Koeffizienten gespeichert werden, wobei zur Bestimmung dieser Koeffizienten mindestens drei Referenzflächen mit konstanter Temperaturverteilung erforderlich sind, die wiederum bei mindestens zwei unterschiedlichen Temperaturen aufgenommen werden. der Rechenaufwand beträgt bei dieser Methode für jeden Pixel drei Multiplikationen und zwei Additionen. das nichtlineare Verhalten des zu korrigierenden Pixels kann mit diesem Algorithmus sehr viel besser beschrieben werden als mit der linearen Methode. Dieser Vorteil wird jedoch durch einen erheblich höheren Rechenaufwand erkauft.

Der Erfindung liegt deshalb die Aufgabe zugrunde, ein optimiertes Korrekturverfahren aufzuzeigen, das die genannten Nachteile vermeidet und mit wenig Rechenaufwand eine gute Annäherung an den nichtlinearen Kennlinienverlauf jedes Pixels ermöglicht.

Erfindungsgemäß wird diese Aufgabe dadurch gelöst, dass der genutzte Teil der Kennlinie jedes Pixels des Detektors in wenigstens zwei aneinander angrenzende Bereiche unterteilt wird, in denen die Korrektur der Grauwerte jedes Pixels mit Hilfe jeweils abschnittsweise linearer Funktionen der gespeicherten Korrekturwerte für Offset und daran anschließend der Verstärkung erfolgt.

Daraus ergibt sich zum einen der erwünschte Vorteil, dass die Kennlinie jedes Pixels innerhalb der Abschnitte weitgehend durch die Geradenabschnitte angenähert werden kann. Zum anderen ist der notwendige Rechenaufwand erheblich geringer als bei der quadratischen Korrektur, wobei auch der Umfang der zu speichernden Koeffizienten deutlich niedriger ausfällt.

Das Verfahren wird in vorteilhafter Weise dadurch unterstützt, dass die gespeicherten Korrekturwerte für Offset und Verstärkung abschnittsweise in Tabellenform gespeichert sind und dass der Grauwert jedes Pixels mit Hilfe dieser gespeicherten Korrekturwerte fortlaufend korrigiert wird.

Zur Erhöhung der Genauigkeit der Korrektur bietet es sich an, dass der korrigierte Grauwert jedes Pixels mit einer Konstanten für den radiometrischen Modus angepasst wird.

Mir Hilfe des erfindungsgemäßen Verfahrens wird auf einfache Weise eine Korrektur der Pixelsignale bewirkt, welche mit geringer Rechenzeit und niedrigem Aufwand an Speicherplatz eine gute Annäherung an die ideale Kennlinie erreicht. Ein Ausführungsbeispiel ist in der Zeichnung dargestellt und wird im Folgenden näher beschrieben. Es zeigen:

Fig. 1: ein Blockschaltbild des n-fach abschnittsweise linearen Korrekturalgorithmus,

Fig. 2:   einen exemplarischen Vergleich von linearer (gepunktet), quadratischer (gestrichelt) und zweifach linearer (strichpunktiert) Korrektur.

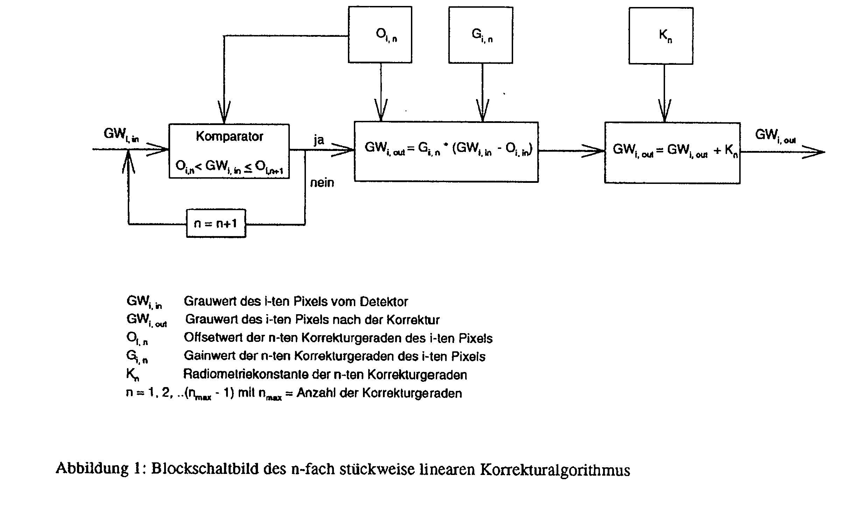

Bei der abschnittsweise linearen Korrektur gemäß Figur 1 werden die Eingangsgrauwerte $GW_{i,\,in}$ der einzelnen Pixel $P_i$ in $n_{max}$ Teilbereichen der Kennlinie mit der bereits oben beschriebenen Korrekturmethode in die entsprechenden Ausgangswerte transformiert. In der Figur 1 ist das Blockschaltbild für die n-fach lineare Korrekturmethode dargestellt.

Das unkorrigierte Eingangssignal $GW_{i,\,in}$ des i-ten Pixels $P_i$ wird zunächst mit Hilfe eines Komparators einem Abschnitt n einer Korrekturgeraden zugeordnet. Diese Zuordnung geschieht über den Vergleich des Eingangssignals $GW_{i,\,in}$ mit den Offsetwerten der n -ten und n+1 -ten Offsettabelle. Die sich daran anschließende Berechnung des korrigierten Ausgangssignals erfolgt dann mit Hilfe der unter der linearen Korrekturmethode beschriebenen Formel.

Die abschnittweise lineare Korrekturmethode vereint die Vorteile von linearer und quadratischer Korrektur, ohne jedoch deren Nachteile zu übernehmen. Somit bleibt der Rechenaufwand mit einer Multiplikation und einer Addition sehr niedrig, da für das Eingangssignal jeweils nur ein Geradenabschnitt zur Korrektur herangezogen wird. Durch die Unterteilung in mehrere Abschnitte mit linearer Korrektur lässt sich der Nachteil der schlechten Korrigierbarkeit eines Pixels mit nichtlinearem Verhalten umgehen. Bereits bei nur zwei Geradenabschnitten zeigt sich selbst für Pixel mit nichtlinearer Kennlinie ein ausreichend gutes Korrekturverhalten.

Aufgrund der Unterteilung in einzelne Abschnitte mit linearer Korrektur lässt sich mit der beschriebenen Methode auch ein sehr großer Temperaturbereich abdecken, ohne dass Inhomogenitäten des Detektors im Bild zu deutlich in Erscheinung treten. Dazu ist lediglich eine geeignete Anzahl von Abschnitten von Korrekturgeraden zu wählen.

Der Speicherbedarf dieses Korrekturverfahrens wächst natürlich mit der Anzahl n der Abschnitte von Korrekturgeraden. So werden für n Abschnitt 2n Tabellen für die Gain- und Offsetwerte benötigt. Aber selbst mit niedrigen n-Werten liefert die stückweise lineare Korrektur Ergebnisse, die deutlich besser als die lineare Korrektur sind. Verglichen mit der quadratischen Korrektur werden mit wesentlich weniger Rechenoperationen vergleichbare Resultate geliefert.

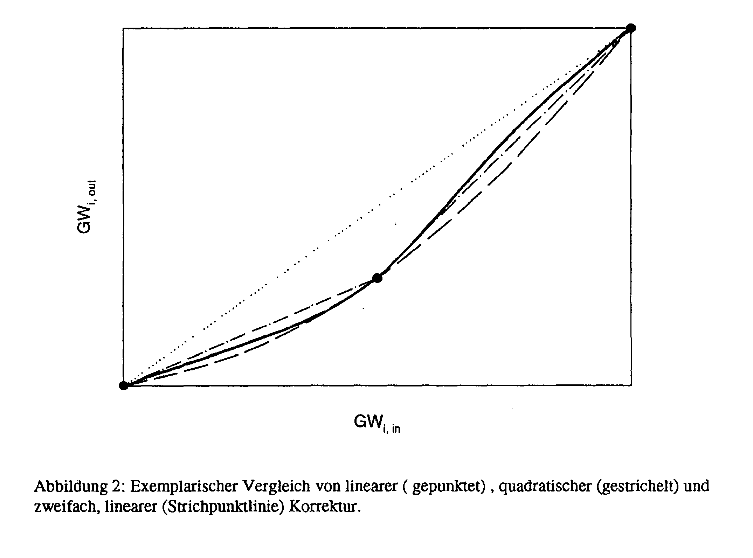

In der Figur 2 ist ein direkter Vergleich der drei beschriebenen Algorithmen dargestellt. Die Durchgezogene Kurve stellt die mittels der Korrektur zu erreichende Kennlinie dar. Die gepunktet gezeichnete lineare Korrektur weicht am weitesten von der idealen Kennlinie ab. Dagegen liegen die zweifach lineare Korrektur (strichpunktiert dargestellt) und auch die quadratische Korrektur (gestrichelt dargestellt) deutlich näher am idealen Verlauf der Kennlinie.

**Patentansprüche**

1.   Verfahren zur Korrektur der Grauwerte eines zweidimensionalen IR-Detektors unter Verwendung gespeicherter Korrekturwerte für Offset ($O_i$) und Verstärkung ($G_i$), **dadurch gekennzeichnet, dass** der genutzte Teil () der Kennlinie jedes Pixels $P_i$ des Detektors in wenigstens zwei aneinander angrenzende Bereiche (n, n+1) unterteilt wird, in denen die Korrektur der Grauwerte ($GW_i$) jedes Pixels mit Hilfe jeweils abschnittsweise linearer Funktionen der gespeicherten Korrekturwerte für Offset ($O_i$) und Verstärkung ($G_i$) erfolgt.

2.   Verfahren zur Korrektur nach Anspruch 1, **dadurch gekennzeichnet, dass** die gespeicherten Korrekturwerte für Offset ($O_i$) und Verstärkung ($G_i$) abschnittsweise in Tabellenform gespeichert sind und dass der Grauwert ($GW_i$) jedes Pixels mit Hilfe dieser gespeicherten Korrekturwerte ($O_i$, $G_i$) fortlaufend korrigiert wird.

3.   Verfahren zur Korrektur nach Anspruch 1 oder 2, **dadurch gekennzeichnet, dass** der korrigierte Grauwert jedes Pixels mit einer Konstanten für den radiometrischen Modus angepasst wird.

$GW_{i, in}$ → **Komparator** $O_{i,n} < GW_{i, in} \leq O_{i,n+1}$ → ja → $GW_{i, out} = G_{i, n} * (GW_{i, in} - O_{i, in})$ → $GW_{i, out} = GW_{i, out} + K_n$ → $GW_{i, out}$

$O_{i, n}$   $G_{i, n}$   $K_n$

nein

$n = n+1$

| | |
|---|---|
| $GW_{i, in}$ | Grauwert des i-ten Pixels vom Detektor |
| $GW_{i, out}$ | Grauwert des i-ten Pixels nach der Korrektur |
| $O_{i, n}$ | Offsetwert der n-ten Korrekturgeraden des i-ten Pixels |
| $G_{i, n}$ | Gainwert der n-ten Korrekturgeraden des i-ten Pixels |
| $K_n$ | Radiometriekonstante der n-ten Korrekturgeraden |
| $n = 1, 2, ..(n_{max} - 1)$ mit $n_{max}$ = Anzahl der Korrekturgeraden | |

Abbildung 1: Blockschaltbild des n-fach stückweise linearen Korrekturalgorithmus

Abbildung 2: Exemplarischer Vergleich von linearer ( gepunktet) , quadratischer (gestrichelt) und zweifach, linearer (Strichpunktlinie) Korrektur.

EP 2 268 002 A1

**EP 2 268 002 A1**

Europäisches
Patentamt

European
Patent Office

Office européen
des brevets

# EUROPÄISCHER RECHERCHENBERICHT

Nummer der Anmeldung

EP 10 00 6164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 149 605 A (MARCONI AVIONICS) 12. Juni 1985 (1985-06-12) * Seite 2, Zeile 56 - Seite 4, Zeile 6 * * Seite 4, Zeile 53 - Seite 6, Zeile 54 * ----- | 1,2 | INV. H04N5/33 ADD. H04N5/217 |
| Y | US 7 304 297 B1 (KING STEPHEN R [US] ET AL) 4. Dezember 2007 (2007-12-04) * Spalte 1, Zeile 6 - Zeile 10 * * Spalte 3, Zeile 48 - Spalte 5, Zeile 48 * ----- | 3 | |
| Y | EP 0 872 718 A2 (INFRAMETRICS INC [US]) 21. Oktober 1998 (1998-10-21) * Spalte 2, Zeile 23 - Spalte 3, Zeile 10 * * Spalte 3, Zeile 51 - Spalte 4, Zeile 56 * * Spalte 12, Zeile 50 - Spalte 13, Zeile 13 * * Spalte 17, Zeile 40 - Spalte 18, Zeile 34 * ----- | 3 | |

RECHERCHIERTE SACHGEBIETE (IPC)

H04N
G01J

Der vorliegende Recherchenbericht wurde für alle Patentansprüche erstellt

| Recherchenort | Abschlußdatum der Recherche | Prüfer |
|---|---|---|
| Den Haag | 6. Oktober 2010 | Wentzel, Jürgen |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
  .............................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 10 00 6164

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2010

| Im Recherchenbericht angeführtes Patentdokument | Datum der Veröffentlichung | Mitglied(er) der Patentfamilie | Datum der Veröffentlichung |
|---|---|---|---|
| GB 2149605 A | 12-06-1985 | KEINE | |
| US 7304297 B1 | 04-12-2007 | KEINE | |
| EP 0872718 A2 | 21-10-1998 | US 6144031 A | 07-11-2000 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19715983 C1